(19) Europäisches Patentamt
European Patent Office
Office européen des brevets

(11) Veröffentlichungsnummer: **0 003 300**
**B1**

(12) **EUROPÄISCHE PATENTSCHRIFT**

(21) Anmeldenummer: **79100101.9**

(22) Anmeldetag: **15.01.79**

(51) Int. Cl.³: **C 08 F 4/64**, C 08 F 136/06

(54) **Katalysator, dessen Herstellung und Verwendung bei der Polymerisation von Butadien**

(30) Priorität: **25.01.78 DE 2803095**

(43) Veröffentlichungstag der Anmeldung:
**08.08.79 Patentblatt 79/16**

(45) Bekanntmachung des Hinweises auf die Patenterteilung:
**17.09.80 Patentblatt 80/19**

(84) Benannte Vertragsstaaten:
**BE DE FR GB IT NL**

(56) Entgegenhaltungen:
**FR - A - 1 293 381**
**FR - A - 1 305 228**
**FR - A - 1 358 691**

(73) Patentinhaber: **BAYER AG**
**Zentralbereich Patente, Marken und Lizenzen**
**D - 5090 Leverkusen 1, Bayerwerk (DE)**

(72) Erfinder: **Sylvester, Gerd, Dr.**
**Im Buchenhain 1**
**D - 5090 Leverkusen 1 (DE)**
**Beck, Manfred, Dr.**
**Auf dem Krahwinkel 5**
**D - 5068 Odenthal (DE)**
**Witte, Josef, Dr.**
**Haferkamp 10**
**D - 5000 Köln 80 (DE)**
**Pampus, Gottfried, Dr.**
**Friedrich-Weskott-Strasse 14**
**D - 5090 Leverkusen (DE)**

**EP 0 003 300 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Katalysator, dessen Herstellung und Verwendung bei der Polymerisation von Butadien

Die Erfindung betrifft einen Katalysator, dessen Herstellung und Verwendung bei der Polymerisation von Butadien.

Der erfindungsgemäße Katalysator enthält:

A) $TiJ_4$ und/oder $TiOR^1J_3$, wobei $R^1$ einen geradkettigen oder verzweigten Alkylrest mit 1—8, bevorzugt 2—3 C-Atomen darstellt,

B) $AlR_3$ und/oder $HAlR_2$, wobei R einen geradkettigen oder verzweigten Alkylrest mit 1—8, bevorzugt 2—4 C-Atomen darstellt,

C) $TiXCl_3$, wobei X einen geradkettigen oder verzweigten Alkoxyrest mit 1—12 C-Atomen darstellt, der gegebenenfalls einfach oder mehrfach, beispielsweise 2—5fach, mit Halogen (Chlor, Brom, Jod),

Cycloalkyl mit 6 bis 7 C-Atomen un/oder Phenyl substituiert ist

einen Cycloalkoxyrest mit 5 bis 7 Ring-C-Atomen darstellt, der gegebenenfalls einfach oder mehrfach, beispielsweise 2- bis 5-fach, mit Alkylgruppen mit 1 bis 5 C-Atomen substituiert ist,

eine Phenoxygruppe der Formel

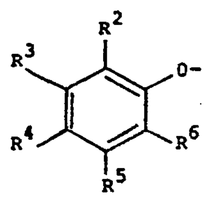

darstellt, in der $R^2$ bis $R^6$ gleich oder verschieden Wasserstoff oder einen geradkettigen oder verzweigten Alkylrest mit 1 bis 5 C-Atomen bedeutet, eine Carboxylgruppe der Formel $R^7$—COO— bedeutet, in der $R^7$ einen geradkettigen oder verzweigten Alkylrest mit 1 bis 12 C-Atomen darstellt, der gegebenenfalls einfach oder mehrfach, beispielsweise 2- bis 5-fach, mit Halogen (Chlor, Brom, Jod), Cycloalkyl mit 5 bis 7 C-Atomen und/oder Phenyl substituiert ist, einen Cycloalkylrest mit 5 bis 7 Ring-C-Atomen darstellt, der gegebenenfalls einfach oder mehrfach, beispielsweise 2- bis 5-fach, mit Alkylgruppen mit 1 bis 5 C-Atomen substituiert ist; oder Phenyl darstellt.

Das Molverhältnis der $TiXCl_3$-Verbindung (C) zur $Ti(OR)J_3$ oder $TiJ_4$-Verbindung (A) beträgt 0,1 bis 1, bevorzugt 0,2 bis 0,6:1.

Die Menge an Aluminiumalkylverbindung (B) ist so gewält, daß das Molverhältnis der Aluminiumverbindung (B) zur Summe der Titanverbindungen (C) und (A) 2 bis 5, bevorzugt 2 bis 3,5:1, beträgt.

Als Beispiel für die Komponente A des Katalysators seien erwähnt:

Methoxytitantrijodid,
Äthoxytitantrijodid,
n-Propoxytitantrijodid,
i-Propoxytitantrijodid,
n-Butoxytitantrijodid,
Titantetrajodid.
Bevorzugt wird Äthoxytitantrijodid.

Beispiele für die Komponente C sind:

Methoxytitantrichlorid,
Äthoxytitantrichlorid,
n-Propoxytitantrichlorid,
i-Propoxytitantrichlorid,
n-Butoxytitantrichlorid,
i-Butoxytitantrichlorid,
β-Chloräthoxytitantrichlorid,
Cyclohexylmethoxytitantrichlorid,
Phenolatotitantrichlorid,
Di-tert.-butylphenolatotitantrichlorid,
Trichloräthoxytitantrichlorid,
Methyl-di-tert.-butylphenolatotitantrichlorid,
2-Äthylhexanoatotitantrichlorid,
Benzoatotitantrichlorid.

Beispiele für die Komponente B sind:

Trimethylaluminium,
Triäthylaluminium,
Trioctylaluminium,
Diäthylaluminiumhydrid.
Bevorzugt wird Triäthylaluminium.

Die Herstellung der erfindungsgemäßen Katalysatoren erfolgt unter Ausschluß von Luft und Feuchtigkeit in aliphatischen oder cycloaliphatischen Kohlenwasserstoffen bei Temperaturen von —10 bis 80°C, in dem man die Komponenten A, B und C miteinander umsetzt, wobei die Reihenfolge der Zugabe der einzelnen Komponenten beliebig gewählt werden kann. Eine bevorzugte Darstellungsweise der Mischkatalysatoren besteht darin, daß man die Umsetzung der Komponenten A, B und C in Gegenwart des mit Hilfe des Katalysators zu polymerisierenden Monomeren durchführt. Besonders bevorzugt werden zu einer Lösunf des zu polymerisierenden Monomeren in aliphatischen oder cycloaliphatischen Kohlenwasserstoffen zunächst die Titankomponenten A und C zugegeben und danach die Aluminiumkomponente B zugefügt.

Die Mengen der einzelnen Katalysatorkomponenten, die bei der Herstellung eingesetzt werden, entsprechen den bereits eingangs näher gekennzeichneten Molverhältnissen.

Der erfindungsgemäße Katalysator kann beispielsweise bei der Polymerisation von Butadien eingesetzt werden.

Für die Polymerisation des Butadiens in Lösung zu Polymerisaten mit hohem Gehalt an cis-1,4-Verknüpfungen sind verschiedene titan-

und jodhaltige Katalysatorsysteme beschrieben worden. Aus den französischen Patentschriften 1 358 691 und 1 293 381 ist beispielsweise die Verwendung von Jod in einem Mehrkomponentenkatalysator, der zur Polymerisation von Butadien eingesetzt wird, bekannt. Es wird angegeben, daß die Produkteigenschaften des Polybutadiens jedoch abfallen, wenn die Jodkomponente des Katalysators nicht benutzt wird.

Ein besonders wirksames System entsteht nach der Lehre der DE-AS 1 190 441 und DE-AS 1 242 371 aus Titanalkoxytrijodiden und Titantetrachlorid in Kombination mit Aluminiumalkylen. Dieses System liefert in aromatischen Lösungsmitteln, insbesondere Benzol, hervorragenden Raum/ZeitAusbeute Butadienpolymerisate mit guten kautschuktechnologischen Eigenschaften.

Die französische Patentschrift 1 305 228 beschreibt für den gleichen Zweck ein Katalysatorsystem bestehend aus $TiCl_4$, $TiJ_4$ und einer Aluminiumverbindung. Der Versuch 47 zeigt auf, daß im Falle der Butadienpolymerisation in einem aliphatischen Kohlenwasserstoff, der cis-Gehalt des Butadiens erheblich gemindert wird. Es besteht jedoch ein erhebliches technisches Interesse, die Polymerisation von Butadien mit Titanalkoxytrijodiden in nichtaromatischen Lösungsmitteln, speziell in aliphatischen oder cycloaliphatischen Lösungsmitteln, durchzuführen. In diesen nichtaromatischen Lösungsmitteln besitzen die bekannten Titankatalysatorsysteme eine stark verminderte Wirksamkeit. Um gleiche Raum/Zeit-Ausbeuten zu erreichen, würde daher ein mehrfaches an Katalysatormenge erforderlich. Eine größere Reaktionsgeschwindigkeit ist zwar prinzipiell auch durch Erhöhung der Temperatur möglich, jedoch sinkt in diesem Fall der Gehalt an cis-1,4-Einheiten im Polymeren und führt damit zu minderwertigen Produkten.

Die erfindungsgemäßen Katalysatoren besitzen in aliphatischen und cycloaliphatischen Lösungsmitteln gegenüber Katalysatoren, die die Komponente $TiXCl_3$ nicht enthalten, eine stark erhöhte Aktivität. Weiterhin wird das bei geringer Katalysatorkonzentration sehr hohe Molekulargewicht des Polybutadiens durch die Katalysatorkomponente $TiXCl_3$ in einen Bereich abgesenkt, der technisch sehr erwünscht ist. Der wesentliche Vorteil der erfindungsgemäßen Katalysatoren besteht darin, daß bei Polymerisationstemperaturen bis 80°C im Bereich der höchsten Umsätze und der technisch brauchbaren Molekulargewichte nur ein geringer Verlust an Stereospezifität der Polymerisation eintritt.

Die Durchführung der Polymerisation von Butadien mit Hilfe der erfindungsgemäßen Katalysatoren erfolgt nach an sich bekannten Verfahren bei Temperaturen von 0 bis 80°C unter Ausschluß von Luft und Feuchtigkeit. Als Lösungsmittel werden aliphatische oder cycloaliphatische Kohlenwasserstoffe, z.B. Pentan, Hexan, Heptan oder bevorzugt Cyclohexan, verwendet.

Die Monomeranfangskonzentration beträgt 5 bis 30 Gew.-%, bevorzugt 10 bis 25 Gew.-%.

Die Katalysatoren werden in solchen Mengen verwendet, daß auf 100 g Butadien 0,05 bis 0,4 mMol, bevorzugt 0,1 bis 0,3 mMol, Titanalkoxytrijodid eingesetzt werden. Die Reaktion springt nach kurzer Zeit an, kenntlich an der Viskositätszunahme der Lösung.

Der metallorganische Mischkatalysaor wird nach beendeter Polymerisation in üblicher Weise durch Zugabe von Aminen, Alkoholen oder Carbonsäuren desaktiviert. Nach Zugabe eines Antioxidans, z.B. 2,6-Di-tert.-butyl-4-methylphenol, wird das Polybutadien aus der Lösung durch Fällen mit einem Nichtlösungsmittel wie Äthanol, Isopropanol oder durch Wasserdampfdestillation des Lösungsmittels isoliert. Der Kautschuk wird im Trockenschrank oder einer Schneckenmaschine getrocknet.

Der gesamte Prozeß, Polymerisation und Aufarbeitung, kann diskontinuierlich oder kontinuierlich durchgeführt werden. Das nach dem erfindungsgemäßen Verfahren hergestellte Polybutadien weist einen Anteil an cis-1,4-Doppelbindungen von 90 bis 95% auf. Die erhaltenen Polymerisate lassen sich allein oder im Verschnitt mit anderen Elastomeren zu Produkten mit hervorragenden technologischen Eigenschaften verarbeiten. Sie sind insbesondere zur Herstellung von Autoreifen und technischen Gummiartikeln geeignet.

Beispiele 1—7

In eine mit $N_2$-gespülte Glasflasche von 500 ml Rauminhalt wurden 290 ml trockenes Cyclohexan unter gleichzeitigem Einleiten von Stickstoff eingefüllt. Danach wurde noch 2 Minuten lang Stickstoff in die Flüssigkeit eingeleitet und anschließend die Flache mit einem Gummipfropfen und einem Kronenkorken aus Metall, der Bohrungen für das Einführen von Injektionsnadeln besaß, luftdicht verschlossen. Aus einem Butadien enthaltenden Zylinder wurden mittels einer Injektionsnadel ca. 50 g flüssiges Monomeres in die Flasche eingefüllt. Durch Spritzen, die ebenfalls mit Injektionsnadeln versehen waren, wurden dann Lösungen bzw. Suspensionen der Katalysatorkomponenten in der Reihenfolge $Ti(OC_2H_5)J_3$, $TiXCl_3$, $Al(C_2H_5)_3$ zu dem Lösungsmittel-Monomer-Gemisch gegeben, wobei die Flasche nach jeder Zugabe geschüttelt wurde.

Die Flasche mit dem Reaktionsgemisch wurde 2 Stunden bei Raumtemperatur sich selbst überlassen. Am Ende wurde die Flasche entkorkt und das Polymere mit 0,5 l Äthanol, der 0,5% eines Antioxidationsmittels enthielt, ausgefällt. Das koagulierte Polybutadien wurde im Vakuum bei 50°C bis zur Gewichtskonstanz getrocknet. Die Mikrostruktur wurde durch Infrarotspektroskopie bestimmt. Die inhärente Viskosität ($\eta inh = \ln \eta r/c$) wurde an einer 0,5%igen Lösung des Polymeren in Toluol gemessen.

TABELLE 1

| Beispiel Nr. | $Ti(OC_2H_5)J_3$ [mMol] | $TiXCl_3$ [mMol] | X | $Al(C_2H_5)_3$ [mMol] | Umsatz [%] | $1n\eta r/c$ | cis 1,4-Gehalt [%] |
|---|---|---|---|---|---|---|---|
| Vergl.-beispiel 1 | 0,1 | 0,06 | Cl | 0,4 | 63 | 1,61 | 88,3 |
| 1 | 0,1 | 0,06 | $OC_2H_5$ | 0,4 | 73 | 1,60 | 91,5 |
| 2 | 0,1 | 0,06 | $On\text{-}C_3H_7$ | 0,4 | 70 | 1,72 | 92,3 |
| 3 | 0,1 | 0,06 | $On\text{-}C_4H_9$ | 0,4 | 84 | 1,77 | 91,8 |
| 4 | 0,1 | 0,06 | $OCH_2C(CH_3)_3$ | 0,4 | 67 | 2,03 | 93,1 |
| 5 | 0,1 | 0,06 | $OCH_2C_6H_{11}$ | 0,4 | 81 | 1,93 | 91,8 |
| 6 | 0,1 | 0,06 | $OCH_2CH_2Cl$ | 0,4 | 76 | 2,22 | 92,5 |
| 7 | 0,1 | 0,06 | $C_7H_{15}CO_2$ | 0,4 | 72 | 1,95 | 93,6 |

Beispiele 8—13

Die Polymerisation wurde in einem trockenen und mit $N_2$-gespühlten Rührgefäß von 40 l Inhalt vorgenommen, welches mit einem Kühlmantel umgeben war. In dieses Gefäß wurden 18 kg Cyclohexan und anschließend 2 kg Butadien eingefüllt. Nach Einstellen der gewünschten Reaktionstemperatur wurden die in Cyclohexan gelösten Katalysatorkomponenten in der Reihenfolge Titanäthoxytrijodid, Titanäthoxytrichlorid, Triäthylaluminium zugegeben. Schließlich wurden weitere 2 kg Butadien eingefüllt. Nach zwei Stunden Reaktionszeit wurde der Katalysator mit einem Gemisch aus Cyclohexan und Äthanol, dem 0,3% 2,6-Di-tert.-butyl-4-methylphenol (bezogen auf festes Polymeres) zugesetzt war, desaktiviert. Das Polybutadien wurde durch Entfernen des Cyclohexans mittels einer Wasserdampfdestillation und anschließende Trocknung bei 50°C im Vakuumtrockenschrank gewonnen.

Katalysatorkonzentrationen, Reaktionsbedingungen, Umsätze und Produkteigenschaften (ML—4'/100°C, cis-1,4-Anteil) sind in Tab. 2 zusammengestellt.

TABELLE 2

| Nr. | $Ti(OC_2H_6)J_3$ [mMol] | $Ti(OC_2H_5)Cl_3$ [mMol] | $Al(C_2H_5)_3$ [mMol] | Temp. [°C] | Umsatz [%] | cis-1,4- [%] | Mooney-Vis-viskosität (M1–4' 100°C) |
|---|---|---|---|---|---|---|---|
| 8 | 6,0 | 4,0 | 30,0 | 40 | 64 | 93,1 | 46 |
| 9 | 6,0 | 4,0 | 30,0 | 45 | 73 | 93,2 | 37 |
| 10 | 6,0 | 3,0 | 22,5 | 50 | 83 | 92,7 | 39 |
| 11 | 6,0 | 2,5 | 25 | 55 | 82 | 93,3 | 48 |
| 12 | 6,0 | 2,5 | 25 | 60 | 85 | 92,0 | 35 |
| 13 | 6,0 | 2,5 | 25 | 80 | 100 | 92,4 | 69 |

Beispiel 14

Wie in Beispiel 1 bis 7 beschrieben wurden in eine 500 ml Glasflasche 290 ml Cyclohexan, 0,1 mMol Titanäthoxytrijodid, 0,06 mMol Titaniso-butoxytrichlorid, 0,4 mMol Triäthylaluminium und nach 20 Minuten 50 g Butadien eingefüllt. Nach 2-stündigem Stehen bei 25°C wurde die Polymerlösung wie in Beispielen 1 bis 7 beschrieben aufgearbeitet.

Die Bestimmung der Mikrostruktur durch Infrarotspektroskopie ergab:

93,8% cis-1,4;
2,1% trans-1,4- und
4,1% 1,2-Doppelbindungen.
$\ln\eta r/c = 2{,}25$.

**Patentansprüche**

1. Katalysator enthaltend

A) $TiJ_4$ und/oder $TiOR^1J_3$, wobei $R^1$ einen geradkettigen oder verzweigten Alkylrest mit 1—8 C-Atomen darstellt,

B) $AlR_3$ und/oder $HalR_2$, wobei R einen geradkettigen oder verzweigten Alkylrest mit 1—8 C-Atomen darstellt, und

C) $TiXCl_3$, wobei X einen geradkettigen oder verzweigten Alkoxyrest mit 1—12 C-Atomen darstellt, der gegebenenfalls einfach oder mehrfach mit Halogen, Cycloalkyl mit 6 bis 7 C-Atomen und/oder Phenyl substituiert ist,

einen Cycloalkoxyrest mit 5 bis 7 Ring-C-Atomen darstellt, der gegebenenfalls einfach oder mehrfach mit Alkylgruppen mit 1 bis 5 C-Atomen substituiert ist,

eine Phenoxygruppe der Formel

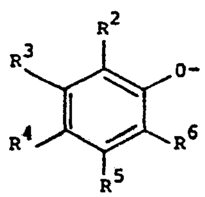

darstellt, in der $R^2$ bis $R^6$ gleich oder verschieden Wasserstoff oder einen geradkettigen oder verzweigten Alkylrest mit 1 bis 5 C-Atomen bedeutet, eine Carboxygruppe der Formel $R^7$—COO bedeutet, in der $R^7$ einen geradkettigen oder verzweigten Alkylrest mit 1 bis 12 C-Atomen darstellt, der gegebenenfalls einfach oder mehrfach mit Halogen, Cycloalkyl mit 5 bis 7 C-Atomen und/oder Phenyl substituiert ist; einen Cycloalkylrest mit 5 bis 7 Ring-C-Atomen darstellt, der gegebenenfalls einfach oder mehrfach mit Alkylgruppen mit 1 bis 5 C-Atomen substituiert ist; oder Phenyl darstellt, wobei die Komponenten A und C im Molverhältnis C zu A von 0,1 bis 1:1 und die Komponente B zur Summe von A und C im Molverhältnis B zur Summe A und C von 2 bis 5:1 vorhanden sind.

2. Katalysator gemäß Anspruch 1, enthaltend

A) zumindest eine Verbindung aus der Gruppe

Methoxytitantrijodid,
Äthoxytitantrijodid,
n-Propoxytitantrijodid,
i-Propoxytitantrijodid,
n-Butoxytitantrijodid,
Titantetrajodid;

B) zumindest eine Verbindung aus der Gruppe

Trimethylaluminium,
Triäthylaluminium,
Trioctylaluminium,
Diäthylaluminiumhydrid

und

C) zumindest eine Verbindung aus der Gruppe

Methoxytitantrichlorid,
Äthoxytitantrichlorid,
n-Propoxytitantrichlorid,
i-Propoxytitantrichlorid,
n-Butoxytitantrichlorid,
i-Butoxytitantrichlorid,
β-Chloräthoxytitantrichlorid,
Cyclohexylmethoxytitantrichlorid,
Phenolatotitantrichlorid,
Di-tert.-butylphenolatotitantrichlorid,
Trichloräthoxytitantrichlorid,
Methyl-di-tert.-butylphenolatotitantrichlorid,
2-Äthylhexanoatotitantrichlorid,
Benzoatotitantrichlorid.

3. Katalysator gemäß Anspruch 2, enthaltend als Komponente

A) Äthoxytitantrijodid
und als Komponente
B) Triäthylaluminium.

4. Katalysator gemäß Ansprüchen 1—3, enthaltend die Komponenten A und C im Molverhältnis C und A von 0,2 bis 0,6:1 und die Komponente B zur Summe von A und C im Molverhältnis B zur Summe A und C von 2 bis 3,5:1.

5. Verfahren zur Herstellung von Katalysatoren gemäß Ansprüchen 1 bis 4, dadurch gekennzeichnet, daß die Komponenten A, B und C in beliebiger Reihenfolge unter Ausschluß von Luft und Feuchtigkeit in aliphatischen oder cycloaliphatischen Kohlenwasserstoffen bei Temperaturen von −10 bis 80°C in An- oder Abwesenheit des Monomeren miteinander umgesetzt werden.

6. Verwendung des Katalysators gemäß Ansprüchen 1 bis 4 bei der Polymerisation von Butadien.

7. Verwendung des Katalysators gemäß Ansprüchen 1 bis 4 bei der Polymerisation von Butadien in aliphatischen und/oder cycloaliphatischen Lösungsmitteln, wobei zu einer Lösung des Butadiens zunächst die Komponenten A und C und anschließend die Komponente B zugegeben wird.

**Claims**

1. A catalyst containing

(a) $TiI_4$ and/or $TiOR^1I_3$, wherein $R^1$ represents a straight- or branched-chain alkyl radical with 1 to 8 C atoms;

(b) $AlR_3$ and/or $HAlR_2$, wherein R represents a straight- or branched-chain alkyl radical with 1 to 8 C atoms; an

(c) $TiXCl_3$, wherein X represents a straight- or branched-chain alkoxy radical with 1 to 12 C atoms, which is optionally substituted one or more times by halogen, cycloalkyl with 6 to 7 C atoms and/or phenyl;

a cycloalkoxy radical with 5 to 7 ring C atoms which is optionally substituted one or more times by alkyl groups with 1 to 5 C atoms;

a phenoxy group of the formula:

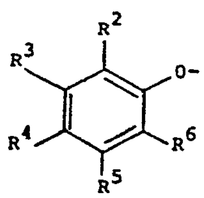

wherein $R^2$ to $R^6$, which may be the same or different, represent hydrogen or a straight- or branched-chain alkyl radical with 1 to 5 C atoms; a carboxyl group of the formula: $R^7$—COO wherein $R^7$ represents a straight- or branched-chain alkyl radical with 1 to 12 C atoms which is optionally substituted one or more times by halogen, cycloalkyl with 5 to 7 C atoms and/or phenyl;

a cycloalkyl radical with 5 to 7 ring C atoms, which is optionally substituted one or more times by alkyl groups with 1 to 5 C atoms; or phenyl, wherein the components (a) and (c) are present in a molar ratio of (c) to (a) of from 0.1:1 to 1:1 and the component (b) is present in relation to the sum of (a) and (c) in a molar ratio of (b) to the sum of (a) and (c) of from 2:1 to 5:1.

2. A catalyst according to Claim 1, containing (a) at least one compound from the group:

methoxy titanium triiodide,
ethoxy titanium triiodide,
*n*-propoxy titanium triiodide,
*i*-propoxy titanium triiodide,
*n*-butoxy titanium triiodide or
titanium tetraiodide;

(b) at least one compound from the group:

trimethyl aluminium,
triethyl aluminium,
trioctyl aluminium or
diethyl aluminium hydride;
and

(c) at least one compound from the group:
methoxy titanium trichloride,
ethoxy titanium trichloride,
*n*-propoxy titanium trichloride,
*i*-propoxy titanium trichloride,
*n*-butoxy titanium trichloride,
*i*-butoxy titanium trichloride,
*β*-chloroethoxy titanium trichloride,
cyclohexyl methoxy titanium trichloride,
phenolatotitanium trichloride,
di-*t*-butyl phenolatotitanium trichloride,
trichloroethoxy titanium trichloride,
methyl di-*t*-butyl phenolatotitanium trichloride,
2-ethyl hexanoatotitanium trichloride or
benzoatotitanium trichloride.

3. A catalyst according to Claim 2, containing as component
(a) ethoxy titanium triiodide and as component
(b) triethyl aluminium.

4. A catalyst according to Claims 1 to 3, containing components (a) and (c) in a molar ratio of (c) to (a) of from 0.2:1 to 0.6:1 and component (b) to the sum of (a) and (c) in a molar ratio of (b) to the sum of (a) and (c) of from 2:1 to 3.5:1.

5. A process for the production of catalysts according to Claims 1 to 4, characterised in that the components (a), (b) and (c) are reacted with each other in any order in the absence of air and moisture in aliphatic or cycloaliphatic hydrocarbons at temperatures of from −10 to +80°C in the presence or absence of the monomer.

6. The use of the catalyst according to Claims 1 to 4 in the polymerisation of butadiene.

7. The use of the catalyst according to Claims 1 to 4 in the polymerisation of butadiene in aliphatic and/or cycloaliphatic solvents, components (a) and (c) initially being added to a solution of the butadiene, followed by the addition of component (b).

**Revendications**

1. Catalyseur contenant:

A) $TiJ_4$ et/ou $TiOR^1J_3$, $R^1$ étant un reste alkyle à chaîne droite ou ramifiée ayant 1 à 8 atomes de carbone,

B) $AlR_3$ et/ou $HAlR_2$, R étant un reste alkyle à chaîne droite ou ramifiée ayant 1 à 8 atomes de carbone, et

C) $TiXCl_3$, X étant un reste alkoxy à chaîne droite ou ramifiée ayant 1 à 12 atomes de carbone, qui est substitué le cas échéant une ou plusieurs fois avec un halogène, un groupe cycloalkyle ayant 6 ou 7 atomes de carbone et/ou un groupe phényle,

un reste cycloalkoxy ayant 5 à 7 atomes de carbone dans le noyau, qui est substitué le cas échéant une ou plusieurs fois avec des groupes alkyle ayant 1 à 5 atomes de carbone,

un groupe phénoxy de formule:

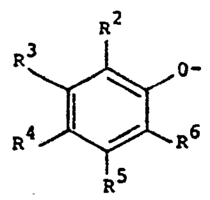

dans laquelle les variables $R^2$ à $R^6$ sont égales ou différentes et représentent de l'hydrogène ou un reste alkyle à chaîne droite ou ramifiée ayant 1 à 5 atomes de carbone, un groupe carboxyle de formule $R^7$—COO dans laquelle $R^7$ est un reste alkyle à chaîne droite ou ramifiée ayant 1 à 12 atomes de carbone, qui est substitué le cas échéant une ou plusieurs fois avec un halogène, un groupe cycloalkyle ayant 5 à 7 atomes de carbone et/ou un groupe phényle; un reste cycloalkyle ayant 5 à 7 atomes de carbone dans le noyau, qui est substitué le cas échéant une ou plusieurs fois avec des groupes alkyle ayant 1 à 5 atomes de carbone; ou un groupe phéyle, les composants A et C étant présents dans le rapport molaire de C à A de 0,1 à 1:1 et le composant B étant présent dans un rapport molaire avec la somme de A et C de 2 à 5:1.

2. Catalyseur suivant la revendication 1, caractérisé en ce qu'il contient A) au moins un composé du groupe:

Triodure de méthoxytitane,
Triodure d'éthoxytitane,
Triodure de n-propoxytitane,
Triodure d'isopropoxytitane,
Triodure de n-butoxytitane,
Tétra-iodure de titane;

B) au moins un composé du groupe:

Triméthylaluminium,
Triéthylaluminium,
Trioctylaluminium,
Hydrure de diéthylaluminium et

C) au moins un composé du groupe

Trichlorure de méthoxytitane,
Trichlorure d'éthoxytitane,
Trichlorure de n-propoxytitane,
Trichlorure d'isopropoxytitane,
Trichlorure de n-butoxytitane,
Trichlorure d'isobutoxytitane,
Trichlorure de β-chloréthoxytitane,
Trichlorure de cyclohexylméthoxytitane,
Trichlorure de phénolatotitane,
Trichlorure de di-tertio-butylphénolatotitane,
Trichlorure de trichloréthoxytitane,
Trichlorure de méthyl-di-tertio-butylphénolatotitane
Trichlorure de 2-éthylhexanoatotitane,
Trichlorure de benzoatotitane.

3. Catalyseur suivant la revendiation 2, caractérisé en ce qu'il contient comme composant
A) le triodure d'éthoxytitane et comme composant
B) le triéthylaluminium.

4. Catalyseur suivant l'une quelconque des revendications 1 à 3, contenant les composants A et C dans un rapport molaire de C à A de 0,2 à 0,6:1 et le composant B dans un rapport molaire avec la somme A plus C de 2 à 3,5:1.

5. Procédé de production de catalyseurs suivant les revendications 1 à 4, caractérisé en ce que les composants A, B et C sont amenés à réagir ensemble dans un ordre quelconque à l'abri de l'air et de l'humidité, dans des hydrocarbures aliphatiques ou cycloaliphatiques, à des températures de —10 à 80°C en présence ou en l'absence du monomère.

6. Utilisation du catalyseur suivant les revendications 1 à 4 dans la polymérisation du butadiène.

7. Utilisation du catalyseur suivant les revendications 1 à 4 dans la polymérisation de butadiène dans des solvants aliphatiques et/ou cycloaliphatiques, une solution du butadiène étant additionnée d'abord des composants A et C puis du composant B.